# EUROPEAN PATENT APPLICATION

(11) **EP 3 363 754 A1**
(43) Date of publication of application: **22.08.2018**
(21) Application number: 18157117.5
(22) Date of filing: 16.02.2018
(51) Int. Cl.: B65G 65/46, A01F 25/20

(54) **BIN SWEEP ASSEMBLY AND METHOD**

(30) Priority: 17.02.2017 US 201762460361 P
(71) Applicant: Actuant Corporation, Menomonee Falls, WI 53051 (US)
(72) Inventor: KLUBERTANZ, James Alan, Colgate, WI Wisconsin 53017 (US); MATENAER, Kyle Mark, West Bend, WI Wisconsin 53090 (US); ZOLP, Dennis James, Kewaskum, WI Wisconsin 53040 (US); BALLWEG, Bradley Joseph, West Bend, WI Wisconsin 53095 (US)
(74) Representative: Byworth, Ian James

(57) **Abstract**

A bin sweep system having a sweep auger and a brush, wherein the brush extends radially beyond the end of the sweep auger to contact the bin wall during operation of the bin sweep to sweep material away from the wall. The sweep auger rotates about a first axis and the brush rotates about a second axis.

## Description

### FIELD

The present invention relates to an improved bin sweep, and more particularly to a bin sweep incorporating a brush to remove materials from a position adjacent the walls of the bin.

### SUMMARY

Current bin sweep systems have a difficulty cleaning grain from a position adjacent the bin walls. This can be due to several factors. For example, roundness of bin wall may require the end of sweep to be several inches from wall. This may result in a constantly changing distance between the end of the sweep and the bin wall. In other situations, hardware or structural members may extend inside the bin which may require the sweep to remain several inches from wall in order to clear the hardware or structural members. Also, current sweep end drives (wheel drives) may limit the ability of the auger to get close to the wall due to the space they consume at the end of the sweep system. Finally, some current sweep end drives (wheel drives) may push grain past the sweep which remains at the bin wall where the sweep auger cannot reach.

As such, a need may exist for a bin sweep that can remove grain from a position adjacent the bin wall.

The present invention relates to a rotary brush sweep attachment allowing for a safer, more efficient clean out process by removing nearly all the grain away from adjacent the bin wall to where the sweep auger can get to it.

One embodiment of the invention relates to a bin sweep system having a sweep auger and a brush, wherein the brush extends radially beyond the end of the sweep auger to contact the bin wall during operation of the bin sweep to sweep material away from the wall. In one embodiment, the sweep auger rotates about a first axis and the brush rotates about a second axis. The first axis can be generally parallel to the bin floor while the second axis can be generally parallel to the bin wall.

In some embodiments, the sweep system includes a cycloidal drive to power a wheel from the sweep auger. In some embodiments, a flexible drive shaft extends between a distal end of the sweep auger and the brush to rotationally drive the brush about the second axis.

One independent aspect of the present invention is that the rotary brush can be installed and uninstalled without removal of other bin components.

Another independent aspect of the present invention is that the rotary brush is bias loaded to float with the bin wall. The biasing element, such as a spring, ensures the brush stays in contact with bin wall even as the distance between the end of the sweep and wall is constantly changing.

Yet another independent aspect of the present invention is that the rotary brush can include a guide wheel ensuring minimal pressure is applied on the bin wall, minimizing wear and force on the wall and bolting hardware.

In another independent aspect, a method of using a bin sweep to remove material from a bin having a floor and a wall is provided. The method includes providing a sweep auger having a first end and a second end radially displaced from the first end, the sweep auger positioned within the bin for rotation about a first axis substantially parallel to the floor; providing a brush coupled to the second end of the sweep auger for rotation about a second axis substantially parallel to the wall; operating the sweep auger about the first axis to cause movement of the material towards an opening in the bin floor; and operating the brush about the second axis to move material located adjacent the wall to a position which the sweep auger can reach.

Further aspects of the present invention, together with the organization and operation thereof, may become apparent from the following detailed description of the invention when taken in conjunction with the accompanying drawings.

### BRIEF DESCRIPTION OF THE DRAWINGS

FIG. 1 is a perspective view of a bin cut open to illustrate the features of a bin sweep.
FIG. 2 is a partial cross-sectional side view of a portion of the bin and bin sweep shown in FIG. 1.
FIG. 3 is a partial perspective view of a brush coupled to a wheel of a bin sweep.
FIG. 4 is a partial perspective view of the embodiment shown in FIG. 3 taken from a different angle.
FIG. 5 is a partial perspective view of the embodiment shown in FIG. 3 taken from a different angle.
FIG. 6 is a partial perspective view of the embodiment shown in FIG. 3 taken from a different angle.
FIG. 7 is a partial perspective view of guide wheel and brush coupled to a wheel of a bin sweep.
FIG. 8 is a partial perspective view of the embodiment shown in FIG. 7 taken from a different angle.
FIG. 9 is a partial perspective view of an alternative guide wheel and brush coupled to a wheel of a bin sweep.
FIG. 10 is a top view of the embodiment shown in FIG. 9.

### DETAILED DESCRIPTION

Before any independent embodiments of the invention are explained in detail, it is to be understood that the invention is not limited in its application to the details of construction and the arrangement of components set forth in the following description or illustrated in the following drawings. The invention is capable of other independent embodiments and of being practiced or of being carried out in various ways. Also, it is to be understood that the phraseology and terminology used herein is for the purpose of description and should not be regarded as limited.

The use of "including," "comprising," or "having" and variations thereof herein is meant to encompass the items listed thereafter and equivalents thereof as well as additional items. The terms "mounted," "connected," and "coupled" are used broadly and encompass both direct and indirect mounting, connecting and coupling. Further, "connected" and "coupled" are not restricted to physical or mechanical connections or couplings, and can include electrical connections or couplings, whether direct or indirect.

Finally, as described in subsequent paragraphs, the specific mechanical configurations illustrated in the drawings are intended to exemplify embodiments of the invention. Accordingly, other alternative mechanical configurations are possible, and fall within the spirit and scope of the present invention.

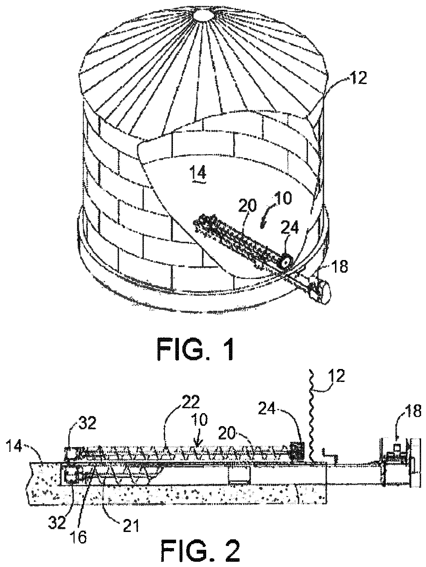

As depicted in FIG. 1, a bin sweep 10 is generally used in a circular bin or storage container 12 having a substantially flat bin floor 14. The bin sweep 10 can be pivotally mounted near the center of the bin 12 so that it can sweep grain, seed, or other material toward an outlet 16 that is located proximate the center of the bin 12.

As depicted in FIGS. 1 and 2, a bin sweep 10 generally includes an engine or motor 18, an auger 20 having a first end and a second end, and a cover or housing 22 that at least partially encloses the auger 20.

The bin sweep 10 also includes a wheel 24. The wheel 24 is coupled to the sweep auger 20 and disposed proximate an outer distal end of the sweep auger 20 for supporting the sweep auger 20 and driving the sweep auger 20 around the floor 14 storage container 12. The sweep auger 20 and the wheel 24 are disposed inside the storage container 12.

The wheel 24 can be constructed many different ways. For example, it can be fairly conventional in construction. Alternatively, in some embodiments, it can be cycloidal wheel drive such as described in US2016/0200528, the teachings of which are hereby incorporated by reference in their entirety.

In the illustrated construction of FIGS. 1 and 2, the motor 18 drives the unload auger 21 for rotation, which is drivingly coupled to the sweep auger 20 through drive boxes 32 to drive the sweep auger 20 for rotation, which is drivingly coupled to the input shaft of the wheel 24. The input shaft and the sweep auger 20 are both coupled concentrically with the wheel 24, e.g., coaxially with the axis of rotation of the wheel 24. The wheel 24 moves the sweep auger 20 around the storage container 12, as described above.

In other constructions, various combinations of separate motors may be employed to drive the unload auger 21, the sweep auger 20, and the wheel 24. For example, a separate motor may be dedicated to each of the unload auger 21, the sweep auger 20, and the wheel 24. In yet other constructions, various combinations of one or more motors may be employed to drive the unload auger 21, the sweep auger 20, and the wheel 24 in various combinations and configurations. In the illustrated construction, the motor 18 is disposed outside of the storage bin 12 proximate the external granule discharge. In other constructions, the motor 18 (or some or all of the motors) may be disposed inside the storage container 12.

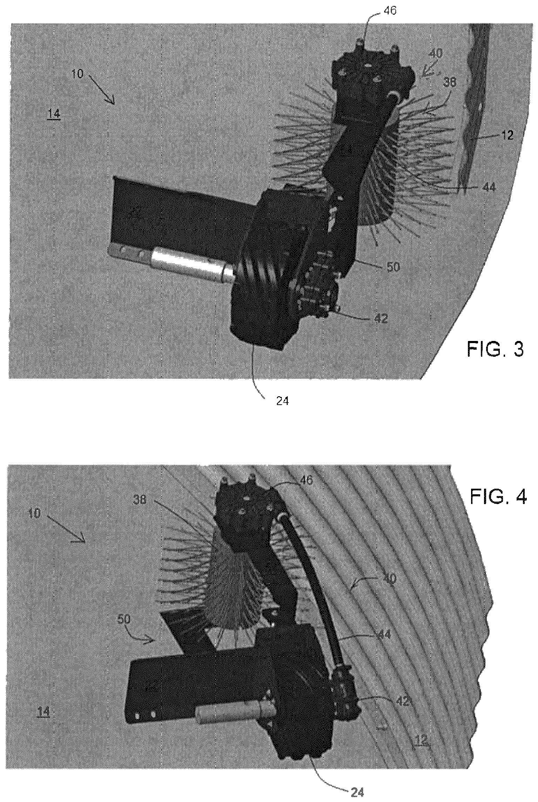

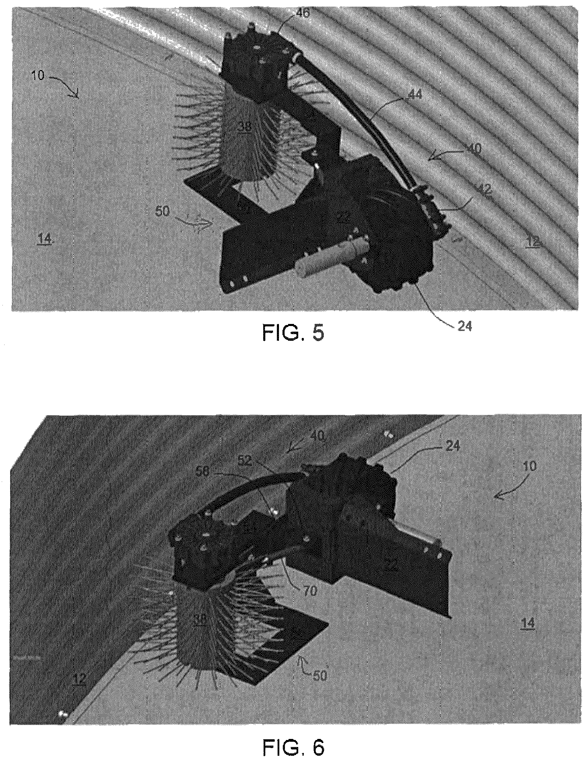

As shown in FIGS. 3-10, a brush 38 is coupled to bin sweep 10. As noted above, the wheel 24 cannot abut the wall 12. As such, material is left between the wheel 24 and the wall 12. The brush 38 is provided to move the material from this region to a location in which the sweep auger 20 can reach the material.

The brush 38 can be comprised of a plurality of bristles. The bristles may be long, short, stiff, soft, wide, narrow, and any combination thereof. Soft bristles can be used when the bin sweep 10 is used in conjunction with a seed storage bin, as the soft bristles are gentle on the seeds and thus prevent damaging the seeds. When in operation, the bristles 38 can be substantially in contact with the bin wall 12 and floor 14. This can be accomplished through a biasing element, such as a spring, shock or other biasing means.

The brush 38 can be oriented many different ways to clear material from the interface of the bin wall 12 and the bin floor 14. However, as illustrated, in preferred embodiments, the brush is oriented to rotate about an axis generally parallel with the bin wall 12. This allows for maximum contact between the brush 38 and floor/wall interface, due to the generally cylindrical configuration of the brush 38. In other brush configurations, a non-parallel orientation may provide the best contact between the brush and floor/wall interface.

As illustrated, the brush is coupled to the end of the sweep auger 20. More particularly, the brush 38 is coupled to the wheel 24.

The brush 38 can be driven many different ways. For example, it can be driven by a chain or a belt drive, which may include pulleys and/or sprockets to vary the speed of the bin sweep 10 during operation. Also, the brush 38 can include a separate motor or engine to drive the brush 38. Additionally, as shown in FIGS 3-10, a flexible drive shaft, such as taught in US Published Application No. 2015/0342113 and US Patent No. 9,366,297, can be used to drive the brush 38. The teachings of US Published Application No. 2015/0342113 and US Patent No. 9,366,297 are hereby incorporated by reference in their entirety.

As shown in FIGS 3-10, the illustrated brush 38 is driven by a flexible shaft drive system 40 having a first gearbox or transmission 42 driven by the motor 18 through the sweep auger 20 and/or wheel 24. This gearbox drives a flexible drive shaft 44, which in turn drives a second gearbox or transmission 46. The second gearbox 46 drives the brush 38.

The first gearbox 42 can be driven several different ways. In one embodiment, it is driven by the shaft of the sweep auger 20. In another embodiment, it is driven by the wheel 24. Depending upon which structures the gearbox 42 attaches to, appropriate gearing can be provided in the first or second gearbox 42, 46 to rotate the brush 38 at a predetermined, desired speed.

As shown in FIGS 3-10, the brush 38 and second gearbox 46 are coupled to a frame 50, which is coupled to the housing 22 of the sweep auger 20. The frame 50 can be constructed and oriented many different ways known in the art. In the illustrated embodiment, the frame 50 has a mounting portion 52 for connecting the frame to the housing 22. The frame 50 also has top arm 54 and a bottom arm 56 for supporting the top and bottom of the brush 38. The second gearbox can be mounted to the top arm 54 to drive the brush 38.

In some embodiments, such as the illustrated embodiment, the frame 50 can include a hinged portion 58 to allow the brush 38 to pivot towards the bin wall 12. As shown in the illustrated embodiment, the hinged portion 58 can be located adjacent mounting portion 52, allowing the top arm 54 and bottom arm 56 to pivot about an axis that is substantially parallel to the bin wall 12.

As noted above, some embodiments also include a biasing element 70 to bias the brush into engagement with the bin wall 12. The biasing element 70 ensures the brush stays in contact with bin wall even as the distance between the end of the sweep and wall is constantly changing. The biasing element can include a spring, a shock or other known biasing means. As shown in FIGS 3-10, the biasing element 70 can extend between the frame 50 mounting portion 52 and another portion of the frame 50 on the hinged portion 58.

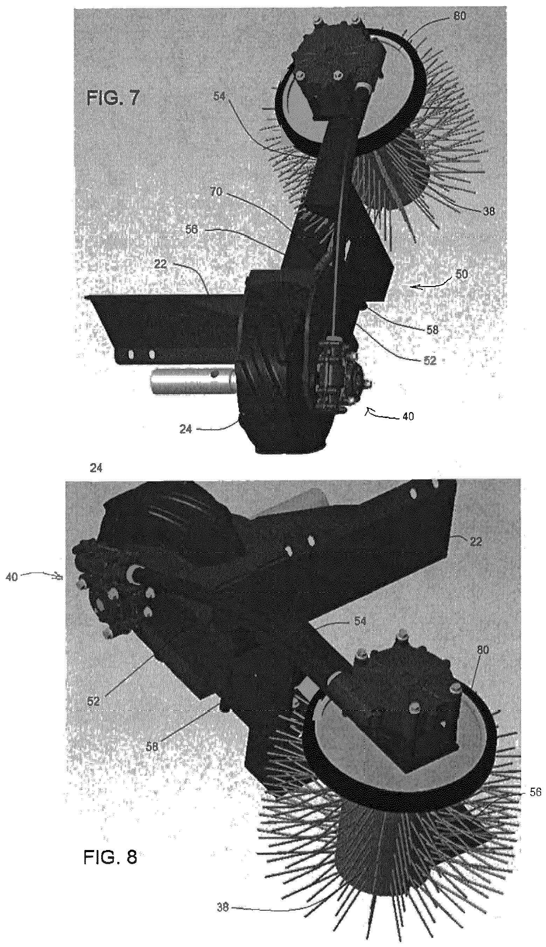

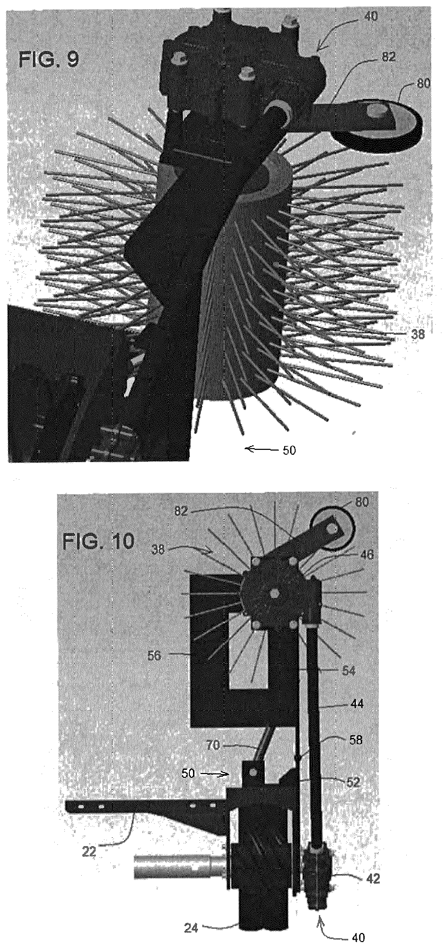

As shown in FIGS 7-10, some embodiments of the bin sweep 10 can also include a guide wheel 80. The guide wheel 80 can be provided to ensure excessive pressure is not applied on the bin wall 12; thus, minimizing wear and force on the wall 12, bolting hardware or other structural elements of the bin. The guide wheel 80 can be configured many different ways. FIGS 7-8 provide a first embodiment wherein the guide wheel 80 is concentric with the brush 38. The guide wheel 80 having a diameter less than the diameter of the brush 38. FIGS 9-10 provide second embodiment wherein the guide wheel 80 is mounted to a support arm 82 and having an axis of rotation that is offset with respect to the brush 38. Again, the brush 38 of this embodiment extends further radially towards the bin wall 12 than the guide wheel to ensure sufficient contact between the brush 38 and wall 12 even with some wear on the brush 38.

In operation, the motor 18 drives the wheel 24 and sweep auger 20 to move the granules towards the discharge opening 16 proximate the center of the storage container 12. The motor 18 also drives the unload auger 21 to move the granules towards the external granule discharge outside of the storage container 12. The motor 18 also drives the wheel 24 to move slowly about a circumference of the storage container 12 to move the sweep auger 20 slowly around the discharge opening as the sweep auger 20 rotates about its own axis which is generally parallel to the floor.

The brush 38 is driven about an axis that generally parallel to the bin wall 12. The brush 38 is driven by the drive system 40, which ultimately receives power from the motor 18 in one of the ways discussed above. Rotation of the brush 38 moves material located between the end of the auger 20 (or wheel 24 - depending upon the construction of the wheel) and the wall 12 to within reach of the auger 20 (or wheel 24). As this distance changes, the biasing element 70 and/or guide wheel 80 can maintain appropriate contact between the brush 38 and the wall 12.

In embodiments utilizing a cycloidal drive disposed in the wheel 24, the cycloidal drive reduces the speed of the input shaft such that the wheel 24 is driven at a lower speed than the input shaft. Thus the wheel 24 is driven slowly relative to the input shaft and in the same direction as the input shaft to move the sweep auger 20 around the storage container 12.

The independent embodiments described above and illustrated in the figures are presented by way of example only and are not intended as a limitation upon the concepts and principles of the present invention. As such, it will be appreciated that various changes in the elements and their configuration and arrangement are possible without departing from the spirit and scope of the present invention. For example, various alternatives to the certain features and elements of the present invention are described with reference to specific independent embodiments of the present invention. With the exception of features, elements, and manners of operation that are mutually exclusive of or are inconsistent with each independent embodiment described above, it should be noted that the alternative features, elements, and manners of operation described with reference to one particular embodiment are applicable to the other embodiments.

Various independent features and/or independent advantages of the invention may be set forth in the following claims.

## Claims

1. A bin sweep system for a bin having a wall, the bin sweep system comprising:
a motor;
a sweep auger having a first end and a second end radially displaced from the first end, the sweep auger being coupled to the motor at the first end for rotation about a first axis;
a wheel coupled to the second end, the wheel being driven for rotation about the first axis by the motor; and
a brush coupled to the second end and driven by the motor about a second axis of rotation, the brush extending radially beyond the second end of the sweep auger and the wheel to contact the wall, at least one of the sweep auger and the wheel being spaced from the wall.

2. The system of claim 1, further comprising one or more of the following features:
a) wherein the first axis is generally parallel to a bin floor, and the second axis is generally parallel to the wall;
b) a cycloidal drive between the wheel and the sweep auger; or
c) wherein the brush is pivotally coupled to the second end of the sweep auger, and wherein the system further comprises a biasing element to bias the brush into contact with the wall.

3. The system of claim 1, further comprising a flexible drive shaft extending between the second end of the sweep auger and the brush to rotationally drive the brush about the second axis.

4. The system of claim 3, wherein the flexible drive shaft is powered by a gearbox coupled to the auger.

5. The system of claim 3, wherein the flexible drive shaft is powered by a gearbox coupled to the wheel.

6. The system of claim 1, further comprising a guide wheel coupled to the brush, the guide wheel allowing sufficient contact between the brush and the wall while preventing excess force between the brush and the wall.

7. The system of claim 6, further comprising one or more of the following features:
d) wherein the guide wheel is co-axial with respect to the brush;
e) wherein the guide wheel is offset with respect to the second axis.

8. A method of using a bin sweep system to remove material from a bin having a floor and a wall, the method comprising:
providing a sweep auger having a first end and a second end radially displaced from the first end, the sweep auger being positioned within the bin for rotation about a first axis substantially parallel to the floor and spaced from the wall;
providing a brush coupled to the second end for rotation about a second axis substantially parallel to and in contact with the wall;
operating the sweep auger about the first axis to cause movement of the material towards an opening in the bin floor; and
operating the brush about the second axis to move material located adjacent the wall to a position of the sweep auger spaced inwardly of the wall.

9. The method of claim 8, further comprising providing a flexible drive shaft extending between the second end of the sweep auger and the brush, and wherein operating the brush includes rotating the drive shaft to operate the brush.

10. The method of claim 9, wherein rotating the drive shaft includes rotating the drive shaft by a gearbox coupled to the auger.

11. The method of claim 9, further comprising providing a wheel coupled to the second end of the sweep auger, and wherein rotating the drive shaft includes rotating the drive shaft by a gearbox coupled to a wheel.

12. The method of claim 8, further comprising:
pivotally coupling the brush to the second end of the sweep auger; and
biasing the brush into contact with the wall.

13. The method of claim 8, further comprising providing a guide wheel coupled to the brush, the guide wheel allowing sufficient contact between the brush and the wall while preventing excess force between the brush and the wall.

14. A bin sweep system for a bin having a wall, the bin sweep system comprising:
a motor;
a sweep auger having a first end and a second end radially displaced from the first end, the sweep auger being coupled to the motor at the first end for rotation about a first axis, the sweep auger being spaced from the wall;
a brush pivotably coupled to the second end and driven by the motor about a second axis of rotation, the brush extending radially beyond the second end of the sweep auger to contact the wall; and
a biasing element to bias the brush into contact with the wall.

15. The system of claim 14, further comprising one or more of the following features:
f) a wheel coupled to the second end of the sweep auger for rotation about the first axis, the wheel being spaced from the wall;
g) a flexible drive shaft extending between the second end of the sweep auger and the brush to rotationally drive the brush about the second axis; or
h) a guide wheel coupled to the brush, the guide wheel allowing sufficient contact between the brush and the wall while preventing excess force between the brush and the wall.
